# EUROPEAN PATENT APPLICATION

(11) **EP 4 840 653 A1**
(43) Date of publication of application: **18.11.2026**
(21) Application number: 26171842.3
(22) Date of filing: 13.04.2026
(51) Int. Cl.: B60C 23/06, G01M 17/02

(54) **TREAD PEELING DETECTION DEVICE, TREAD PEELING DETECTION METHOD, AND TREAD PEELING DETECTION PROGRAM**

(30) Priority: 13.05.2025 JP 2025080208
(71) Applicant: SUMITOMO RUBBER INDUSTRIES, LTD., Kobe-shi, Hyogo 651-0072 (JP)
(72) Inventor: TOKUDA, Kazuma, Chuo-ku, Kobe-shi, Hyogo, 651-0072 (JP)
(74) Representative: TBK

(57) **Abstract**

Tread peeling is highly accurately detected for each tire mounted to a vehicle. A tread peeling detection device according to the present embodiment determines whether or not tread peeling has occurred in a wheel assembly, by periodically calculating a detection index representing rotational unevenness in one rotation of the wheel assembly, and comparing the detection index in a current cycle with the detection index in a past cycle, which is a predetermined cycle before the current cycle.

## Description

### BACKGROUND OF THE INVENTION

### Field of the Invention

The present invention relates to a tread peeling detection device, a tread peeling detection method, and a tread peeling detection program for detecting peeling of a tread with respect to a tire mounted to a vehicle.

### Background Art

To date, with respect to a tire mounted to a vehicle, attempts to detect peeling of a tread have been known. For example, Japanese Laid-Open Patent Publication No. 2003-146036 discloses a method for detecting tread peeling by using the first continuous and periodic vibration that occurs in a wheel assembly and that is proportional to the rotational speed of the wheel assembly.

### SUMMARY OF THE INVENTION

With respect to the conventional tread peeling detection method as described above, the present inventor found the following problem. That is, the present inventor found a problem that: when tread peeling has occurred in a tire, the influence (degree of influence) of such tread peeling varies for each tire (wheel assembly); and it is difficult to accurately detect the tread peeling using a fixed and universal threshold.

The present invention has been made, in an aspect, in view of such circumstances, and an object of the present invention is to provide a tread peeling detection device and the like that can highly accurately detect tread peeling for each tire mounted to a vehicle.

A tread peeling detection device according to a first aspect of the present invention includes a signal acquisition unit, a detection index calculation unit, and a determination unit. The signal acquisition unit sequentially acquires a signal representing a rotation speed of a wheel assembly included in a vehicle, as pulses having a rise. The detection index calculation unit periodically calculates, from temporal variation of the rise of each of the pulses corresponding to one rotation of the wheel assembly, a detection index representing rotational unevenness of the wheel assembly in the one rotation. The determination unit determines whether or not tread peeling has occurred in the wheel assembly, by comparing the detection index in a current cycle with the detection index in a past cycle, which is a predetermined cycle before the current cycle.

In the tread peeling detection device according to a second aspect of the present invention based on the tread peeling detection device according to the first aspect, the determination unit may compare a statistical amount calculated from the detection index in each of a plurality of cycles in a predetermined range including the current cycle, with the statistical amount calculated from the detection index in each of a plurality of cycles in the predetermined range including the past cycle.

The tread peeling detection device according to a third aspect of the present invention based on the tread peeling detection device according to the first aspect or the second aspect may further include a first index calculation unit and a spectrum calculation unit. The first index calculation unit may calculate a first index representing the temporal variation, from the signal sequentially acquired by the signal acquisition unit. The spectrum calculation unit may calculate a frequency spectrum for rotational orders from a first order to an mth order (where m≥1) of the first index, by performing frequency analysis on the first index. The detection index calculation unit may periodically calculate the detection index, from a gain for each rotational order of the frequency spectrum calculated by the spectrum calculation unit.

A tread peeling detection method according to a fourth aspect of the present invention is executed by a computer, and includes the following. A tread peeling detection program according to a fifth aspect of the present invention causes a computer to execute the following.
· A step of sequentially acquiring a signal representing a rotation speed of a wheel assembly included in a vehicle, as pulses having a rise;
· A step of periodically calculating, from temporal variation of the rise of each of the pulses corresponding to one rotation of the wheel assembly, a detection index representing rotational unevenness of the wheel assembly in the one rotation; and
· A step of determining whether or not tread peeling has occurred in the wheel assembly, by comparing the detection index in a current cycle with the detection index in a past cycle, which is a predetermined cycle before the current cycle.

According to the present invention, it is possible to provide a tread peeling detection device and the like that can highly accurately detect tread peeling for each tire mounted to a vehicle.

### BRIEF DESCRIPTION OF THE DRAWINGS

FIG. 1 is a schematic diagram showing a schematic configuration of a vehicle including a tread peeling detection device according to an embodiment of the present invention;
FIG. 2 is a block diagram showing an electrical configuration of the tread peeling detection device according to the embodiment of the present invention;
FIG. 3 is a flowchart showing an example of the processing procedure of a tread peeling detection method according to the embodiment of the present invention; and
FIG. 4 is a flowchart showing an example of the processing procedure, after the process exemplified in FIG. 3 has been performed, of the tread peeling detection method according to the embodiment of the present invention.

### DETAILED DESCRIPTION

Hereinafter, an embodiment (hereinafter, also referred to as "the present embodiment") according to an aspect of the present invention will be described with reference to the drawings. However, the present embodiment described below is merely an example of the present invention in all aspects. It is needless to say that various improvements and modifications can be made without departing from the scope of the present invention. That is, in implementation of the present invention, a specific configuration according to an embodiment may be adopted as appropriate. Data appearing in the present embodiment is described in natural language, but more specifically, the data is designated by pseudo-language, commands, parameters, machine language, or the like that can be recognized by a computer.

### <1. Outline>

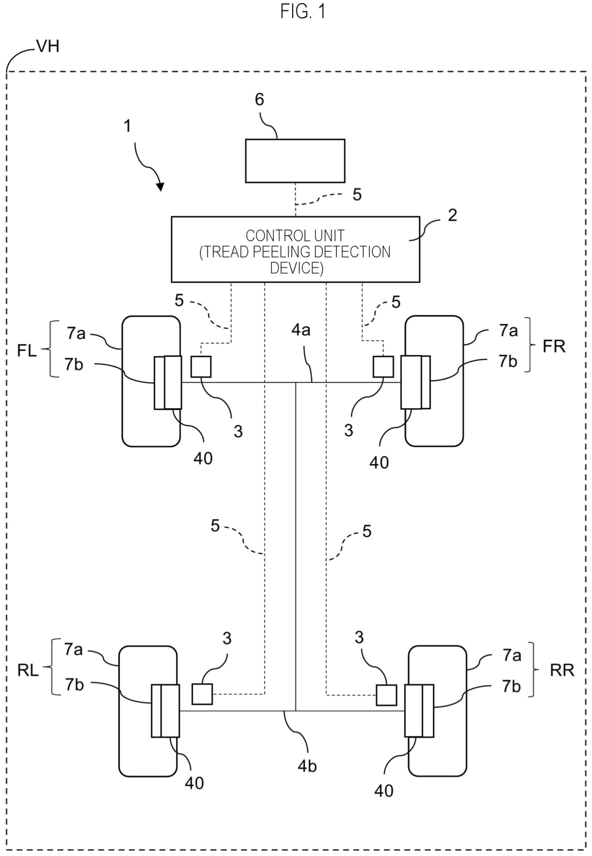

FIG. 1 is a schematic diagram showing a situation where a tread peeling detection system 1 according to the present embodiment is installed in a vehicle VH. The vehicle VH is an example of a "vehicle" of the present invention. In the present embodiment, the vehicle VH is a four-wheeled vehicle and includes a front left wheel assembly FL, a front right wheel assembly FR, a rear left wheel assembly RL, and a rear right wheel assembly RR. In the present embodiment, when it is not necessary to particularly distinguish the front left wheel assembly FL, the front right wheel assembly FR, the rear left wheel assembly RL, and the rear right wheel assembly RR from each other, these wheel assemblies may be simply referred to as "wheel assembly". The vehicle VH includes a front axle 4a and a rear axle 4b, and the wheel assemblies FL, FR, RL, RR are attached to hubs 40 fixed to the left and right ends of the front and rear axles 4a, 4b, respectively. The wheel assemblies FL, FR, RL, RR each include a wheel 7b and a tire 7a assembled thereto, and the wheel 7b is attached and fixed to the hub 40 by means of a fixing member (not shown). The fixing member is, typically, a plurality of wheel nuts each having a screw thread. By engaging the fixing members to hub bolts (not shown) on the hub 40 side and appropriately tightening the screws, the respective wheel assemblies are fixed to the hubs 40 without loosening relative to the hubs 40.

The tread peeling detection system 1 includes a control unit 2 serving as a "tread peeling detection device" according to the present embodiment, and a sensor unit 3 that detects information representing the rotation speeds of the wheel assemblies FL, FR, RL, RR. The control unit 2 determines "whether or not tread peeling has occurred" in at least one of the wheel assemblies FL, FR, RL, RR, on the basis of signals outputted from the sensor unit 3. If the control unit 2 has determined that tread peeling has occurred in a wheel assembly, the control unit 2 notifies an occupant of the vehicle VH, such as the driver, of the determination result via a display device 6 included in the vehicle VH. If the control unit 2 has determined that tread peeling has occurred in at least one of the wheel assemblies FL, FR, RL, RR, the control unit 2 may identify the wheel assembly (tread-peeling-occurrence wheel assembly) in which the tread peeling has occurred, and notify the occupant of the identified tread-peeling-occurrence wheel assembly, via the display device 6 included in the vehicle VH.

In the present embodiment, the control unit 2 calculates a second index Y (detection index) representing rotational unevenness of a wheel assembly in one rotation of the wheel assembly, on the basis of a signal outputted from the sensor unit 3. On the basis of a signal outputted from the sensor unit 3 corresponding to each wheel assembly, the control unit 2 calculates the second index Y with respect to the wheel assembly. Here, when tread peeling has occurred in a wheel assembly, the tire 7a (wheel assembly) enters an ununiform state (e.g., ununiform shape), and the rotation state of the wheel assembly changes. Therefore, by using the second index Y, the control unit 2 determines whether or not the rotation state of the wheel assembly has changed, and if the rotation state of the wheel assembly has changed, the control unit 2 determines that tread peeling has occurred in the wheel assembly. By using the second index Y, the control unit 2 can highly accurately detect tread peeling having occurred in the wheel assembly. By using the second index Y calculated with respect to each wheel assembly, the control unit 2 can highly accurately determine whether or not tread peeling has occurred, with respect to each wheel assembly.

In particular, the control unit 2 according to the present embodiment periodically calculates the above-mentioned the second index Y (detection index) on the basis of each signal outputted from the sensor unit 3. Then, with "X" defined as a "predetermined integer of 1 or greater", the control unit 2 compares the second index Y in the current cycle EC (0) with the second index Y in a past cycle EC (0-X), which is a predetermined cycle EC (X) before the current cycle EC (0), thereby determining whether or not tread peeling has occurred in the wheel assembly. That is, the control unit 2 determines whether or not tread peeling has occurred, by periodically calculating the second index Y for each wheel assembly and comparing the second index Y in the current cycle EC (0) with the second index Y in the past cycle EC (0-X) for each wheel assembly. Accordingly, the control unit 2 can highly accurately detect tread peeling, for each tire 7a (wheel assembly) mounted to the vehicle VH.

### <2. Tread peeling detection system>

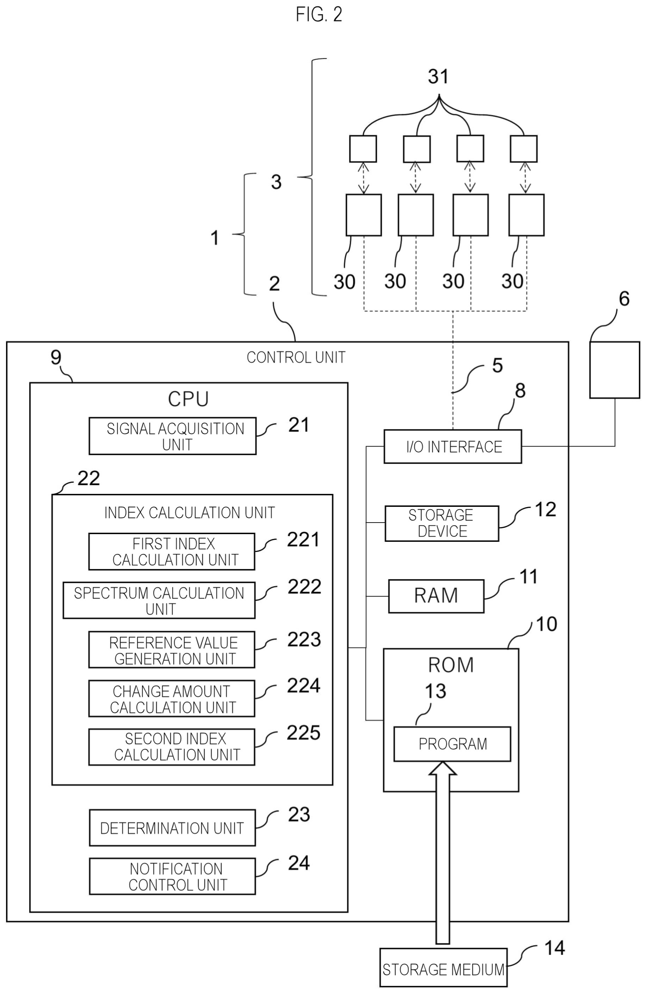

FIG. 2 is a block diagram showing an electrical configuration of the tread peeling detection system 1. Hereinafter, each component of the tread peeling detection system 1 will be described.

### [Control unit]

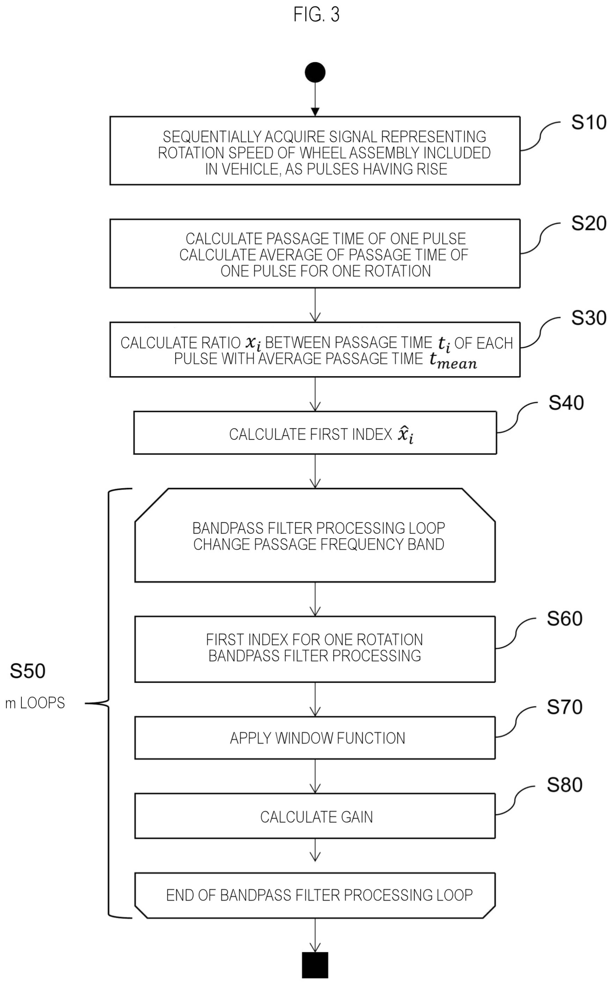

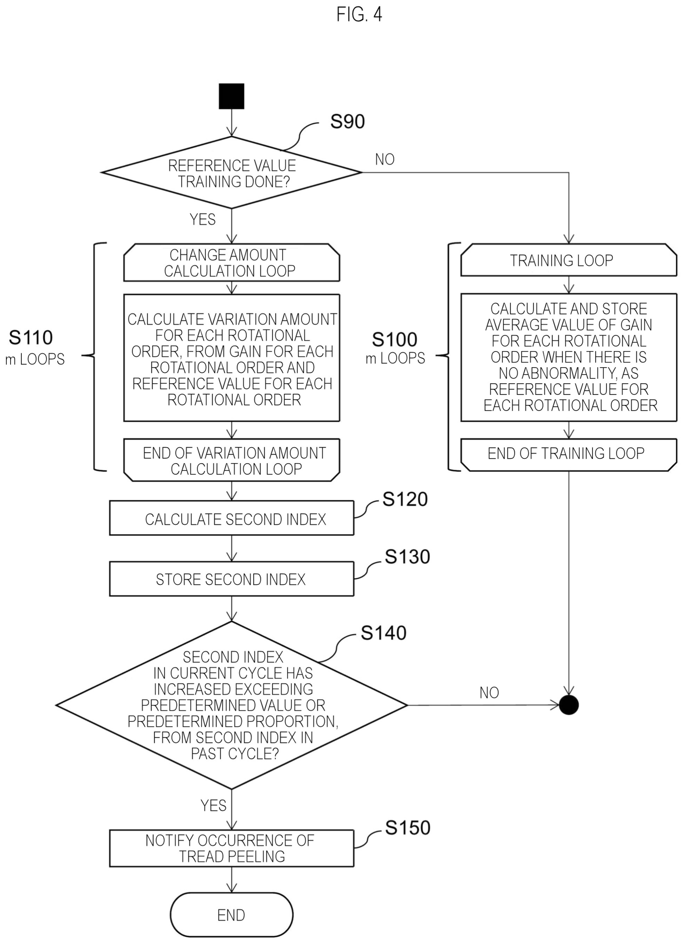

The control unit 2 is an in-vehicle computer as hardware and includes an I/O interface 8, a CPU (Central Processing Unit) 9, a ROM (Read Only Memory) 10, a RAM (Random Access Memory) 11, and a nonvolatile rewritable storage device 12. The I/O interface 8 is a communication device for communicating with external devices such as the sensor unit 3 and the display device 6. A program 13 for controlling the operation of each unit of the vehicle VH is stored in the ROM 10. In the present embodiment, the program 13 is a program for causing the control unit 2 to execute a tread peeling detection method PM (FIG. 3 and FIG. 4) for "determining whether or not tread peeling has occurred in a wheel assembly included in the vehicle VH". The program 13 includes a series of commands of information processing performed in the tread peeling detection method PM. The program 13 is written from a storage medium 14 such as a CD-ROM into the ROM 10. The CPU 9 reads out the program 13 from the ROM 10 and executes the program 13, thereby virtually operating as a signal acquisition unit 21, an index calculation unit 22, a determination unit 23, and a notification control unit 24.

The signal acquisition unit 21 is an example of a "signal acquisition unit" of the present invention, and sequentially acquires a signal representing the rotation speed of each of the wheel assemblies FL, FR, RL, RR included in the vehicle VH, as pulses having a rise. In the present embodiment, the signal acquisition unit 21 sequentially acquires a sine wave signal outputted from each sensor 30 with respect to a corresponding wheel assembly, as pulses having a rise.

The index calculation unit 22 is an example of a "detection index calculation unit" of the present invention, and periodically calculates, from temporal variation of the rise of each of the pulses corresponding to one rotation of the wheel assembly, the second index Y representing rotational unevenness of the wheel assembly in one rotation of the wheel assembly. The second index Y is an example of a "detection index" of the present invention. In the example shown in FIG. 2, the index calculation unit 22 includes a first index calculation unit 221, a spectrum calculation unit 222, a reference value generation unit 223, a change amount calculation unit 224, and a second index calculation unit 225.

With respect to each wheel assembly, the first index calculation unit 221 calculates a first index representing temporal variation of the rise of each of the pulses corresponding to one rotation of the wheel assembly, from a signal representing the rotation speed of the wheel assembly (in the present embodiment, a sine wave signal outputted from the corresponding sensor 30 with respect to the wheel assembly). That is, with respect to each wheel assembly, the first index calculation unit 221 calculates the first index representing the "temporal variation of the rise of each of the pulses corresponding to one rotation of the wheel assembly", from a "signal representing the rotation speed of the wheel assembly" sequentially acquired by the signal acquisition unit 21.

The spectrum calculation unit 222 performs frequency analysis on the first index calculated by the first index calculation unit 221 to calculate the frequency spectrum for the rotational orders from the first order to an mth order (where m≥1) of the first index. Further, in the present embodiment, the spectrum calculation unit 222 calculates a gain Gⱼ of the frequency spectrum for the rotational orders from the first order to the mth order. In other words, the spectrum calculation unit 222 calculates the gain Gⱼ (j = 1, 2, ..., m) for each rotational order.

The reference value generation unit 223 generates a reference value (also referred to as "training value") for each rotational order, from the gain Gⱼ calculated for each rotational order by the spectrum calculation unit 222. In the present embodiment, the reference value generation unit 223 generates a reference value for each rotational order from the first order to the mth order, from a statistical value of the gain Gⱼ for each rotational order from the first order to the mth order. For example, with respect to the rotational orders from the first order to the mth order, the reference value generation unit 223 calculates (generates), as the reference value for each rotational order, the average value of the gain Gⱼ for each rotational order. For example, the reference value generation unit 223 calculates, as the reference value for each rotational order, the average value of the gain Gⱼ for each rotational order, in a period in which an abnormality such as tread peeling has not occurred.

The change amount calculation unit 224 calculates a gain variation amount Eⱼ for each rotational order, from the gain Gⱼ calculated for each rotational order by the spectrum calculation unit 222, and the reference value calculated for each rotational order by the reference value generation unit 223. In the present embodiment, with respect to the rotational orders from the first order to the mth order, the change amount calculation unit 224 calculates, as the gain variation amount Eⱼ for each rotational order, the absolute value of the difference between the gain Gⱼ for each rotational order and the reference value for each rotational order.

The second index calculation unit 225 calculates the second index Y (detection index), from the gain variation amount Eⱼ calculated for each rotational order from the first order to the mth order by the change amount calculation unit 224. In the present embodiment, the second index calculation unit 225 calculates, as the second index Y, the total of the gain variation amount Eⱼ for each rotational order from the first order to the mth order.

The determination unit 23 determines whether or not tread peeling has occurred in at least one of the wheel assemblies FL, FR, RL, RR, by comparing the second index Y (detection index) in the current cycle EC (0) with the second index Y in a past cycle EC (0-X), which is a predetermined cycle EC (X) before the current cycle EC (0). In the present embodiment, the determination unit 23 determines that tread peeling has occurred if the second index Y in the current cycle EC (0) has increased exceeding a predetermined value or a predetermined proportion from the second index Y in the past cycle EC (0-X). If the determination unit 23 has determined that tread peeling has occurred in at least one of the wheel assemblies FL, FR, RL, RR, the determination unit 23 may output the result of the determination to the notification control unit 24. Further, the determination unit 23 may identify the wheel assembly (tread-peeling-occurrence wheel assembly) for which it has been determined as "tread peeling has occurred", and output, to the notification control unit 24, information that distinguishes the identified tread-peeling-occurrence wheel assembly from the other wheel assemblies.

The determination unit 23 according to the present embodiment may determine whether or not tread peeling has occurred in the wheel assembly, by comparing a statistical amount calculated from the second index Y (detection index) in each of a plurality of cycles in a predetermined range including the current cycle EC (0), with the statistical amount calculated from the second index Y in each of a plurality of cycles in a predetermined range including the past cycle EC (0-X). The statistical amount may be an average value, or may be a median, a standard deviation, or the like. For example, the determination unit 23 may determine whether or not tread peeling has occurred in the wheel assembly, by comparing the average value of the second index Y in a plurality of cycles in a predetermined range including the current cycle EC (0), with the average value of the second index Y in a plurality of cycles in a predetermined range including the past cycle EC (0-X). The determination unit 23 may determine that tread peeling has occurred if the average value of the second index Y in a plurality of cycles in a predetermined range including the current cycle EC (0) has increased exceeding a predetermined value or a predetermined proportion from the average value of the second index Y in a plurality of cycles in a predetermined range including the past cycle EC (0-X).

For example, with "k" defined as a "predetermined integer of 1 or greater and smaller than X", the determination unit 23 may determine whether or not tread peeling has occurred in the wheel assembly by using a statistical value of the second index Y in a plurality of cycles. That is, the determination unit 23 may determine whether or not tread peeling has occurred in the wheel assembly, by comparing a statistical amount of the second index Y of "k+1" cycles including the current cycle EC (0) with the statistical amount of the second index Y of "k+1" cycles including the past cycle EC (0-X). For example, "'k+1' cycles including the current cycle EC (0)" described above may be "k+1" cycles from the "current cycle EC (0)" to a "cycle EC (0-k), which is k cycles before the current cycle EC (0)". Similarly, for example, the "'k+1' cycles including the past cycle EC (0-X)" may be "k+1" cycles from the "past cycle EC (0-X)" to "a cycle EC (0-X-k), which is k cycles before the past cycle EC (0-X)". In a case where the determination unit 23 compares the statistical value of the second index Y in "k+1" cycles including the current cycle EC (0) with the statistical value of the second index Y in "k+1" cycles including the past cycle EC (0-X), "X" is a "predetermined integer of 2 or greater".

For example, there may occur a special situation in which, due to some event other than "occurrence of tread peeling", the second index Y in the current cycle EC (0) accidentally increases exceeding a predetermined value or a predetermined proportion from the second index Y of the past cycle EC (0-X). Even in a case where such a special situation has occurred, the determination unit 23 can avoid mistakenly determining that "tread peeling has occurred in the wheel assembly", by using the statistical amount of the second index Y in a plurality of cycles (in the example described above, "k+1" cycles) in a predetermined range. That is, by comparing the statistical amount of the second index Y in a plurality of cycles in a predetermined range including the current cycle EC (0) with the statistical amount of the second index Y in a plurality of cycles in a predetermined range including the past cycle EC (0-X), the determination unit 23 can maintain and improve the accuracy of the determination as to whether or not tread peeling has occurred in the wheel assembly.

The determination unit 23 may compare the second index Y (detection index) in the current cycle EC (0) with the second index Y in the past cycle EC (0-X), by using an algorithm, such as changefinder, that detects a timepoint at which behavior of time-series data abruptly changes. That is, by using an "algorithm that detects a change point (timepoint at which nature of time-series data changes)", the determination unit 23 may detect that "the second index Y in the current cycle EC (0) has increased exceeding a predetermined value or a predetermined proportion from the second index Y in the past cycle EC (0-X)". However, for the determination unit 23, use of an algorithm that detects the change point is not essential. The determination unit 23 only needs to be able to compare the second index Y in the current cycle EC (0) with the second index Y in the past cycle EC (0-X), and the method for performing the comparison therebetween is not particularly limited. Similarly, by using an algorithm that detects the change point, the determination unit 23 may compare a statistical amount calculated from the second index Y (detection index) in each of a plurality of cycles in a predetermined range including the current cycle EC (0) with the statistical amount calculated from the second index Y in each of a plurality of cycles in a predetermined range including the past cycle EC (0-X).

If it has been determined that "tread peeling has occurred in at least one of the wheel assemblies FL, FR, RL, RR" by the determination unit 23, the notification control unit 24 causes the display device 6 to display the determination result. If the notification control unit 24 has received "information that distinguishes the tread-peeling-occurrence wheel assembly from the other wheel assemblies" from the determination unit 23, the notification control unit 24 may cause the display device 6 to display the information that identifies the tread-peeling-occurrence wheel assembly.

As described above, the control unit 2 includes the first index calculation unit 221 and the spectrum calculation unit 222. The index calculation unit 22 (second index calculation unit 225, in particular) periodically calculates the second index Y (detection index), from the gain Gⱼ for each rotational order from the first order to the mth order of the frequency spectrum calculated by the spectrum calculation unit 222. That is, the control unit 2 performs frequency analysis on the first index representing temporal variation of the rise of each of the pulses corresponding to one rotation of the wheel assembly, calculates the gain Gⱼ for each rotational order, and calculates the second index Y by using the gain Gⱼ for each rotational order. Therefore, the control unit 2 can accurately calculate the detection index (second index Y) representing rotational unevenness in one rotation of the wheel assembly, from the first index representing temporal variation of the rise of each of the pulses corresponding to one rotation of the wheel assembly. Then, by using the second index Y (detection index), the control unit 2 can highly accurately determine whether or not tread peeling has occurred in the wheel assembly.

The storage device 12 is composed of a hard disk, a flash memory, or the like. The program 13 may be stored in the storage device 12 instead of the ROM 10. The RAM 11 and the storage device 12 are used as appropriate in calculation performed by the CPU 9.

### [Sensor unit]

The sensor unit 3 includes four rotating bodies 31 that respectively rotate together with the wheel assemblies (respective wheel assemblies FL, FR, RL, RR), and four sensors 30 that respectively continuously detect physical quantities changed due to the rotating bodies 31 and output detection signals. As long as each rotating body 31 is attached so as to be rotatable together with the corresponding wheel assembly about the rotation axis of the wheel assembly, the position at which the rotating body 31 is attached is not particularly limited. The four sensors 30 are respectively attached to non-rotating portions of the vehicle body in the vicinity of the corresponding four rotating bodies 31. Each sensor 30 is connected to the control unit 2 via a communication line 5.

Each rotating body 31 is a gear composed of a magnetic material in the present embodiment, but is not limited to this. Each sensor 30 is a magnetic field sensor including therein a permanent magnet and a coil in the present embodiment, but is not limited to this, and is fixed to the vehicle body so as to face the side circumferential surface of the rotating body 31. The magnetic field generated by the permanent magnet of the sensor 30 changes as the rotating body 31 rotates and the teeth sequentially pass in front of the sensor 30, thereby generating an induced electromotive force in the coil. The waveform of the induced electromotive force is a sine wave whose frequency is proportional to the rotation speed of the rotating body 31. This sine wave has the same number of cycles as the number of teeth (in the present embodiment, "N") of the rotating body 31, and one cycle corresponds to one rotation of the wheel assembly. The sensor 30 outputs a sine wave signal based on the induced electromotive force, to the control unit 2 in real time, as a signal representing the rotation speed of the wheel assembly.

### [Display device]

The display device 6 is a display (display apparatus) whose display is controlled by the control unit 2, and is, for example, an in-vehicle HMI (Human Machine Interface). The display device 6 may be any device that can notify the occupant (e.g., the driver of the vehicle VH) of the vehicle VH that "tread peeling has occurred in at least one wheel assembly". For example, the display device 6 can be realized by a liquid crystal display element, a liquid crystal monitor, a plasma display, an organic EL (Electro-Luminescence) display, or the like. In the present embodiment, in addition to notifying that "tread peeling has occurred in at least one wheel assembly", the display device 6 may notify the occupant of the vehicle VH of information that identifies the wheel assembly (tread-peeling-occurrence wheel assembly) in which the tread peeling has occurred. For example, the display device 6 can be configured to have four lamps that respectively correspond to the wheel assemblies, FL, FR, RL, RR and are arranged in accordance with the actual arrangement of the wheel assemblies. The display device 6 may, for example, control the light-emitting state of each lamp in accordance with a control signal from the control unit 2 to distinguish the wheel assembly in which tread peeling has occurred from the wheel assemblies in which no tread peeling has occurred and notify the occupant of the vehicle VH. The position at which the display device 6 is attached can also be selected as appropriate but it is preferable that the display device 6 is provided, for example, at a position, such as on an instrument panel, at which the occupant of the vehicle VH can easily confirm the display content. In a case where the control unit 2 is connected to a car navigation system, a monitor for car navigation can also be used as the display device 6. The notification that tread peeling has occurred can be outputted through the display device 6 in a form such as an icon or textual information. Additionally, the notification that tread peeling has occurred may be outputted in the form of a voice, a warning sound, or the like via a speaker installed in the vehicle VH.

As described above, the control unit 2 is an example of the "tread peeling detection device" of the present invention. With respect to each wheel assembly, the control unit 2 periodically calculates the detection index (second index Y) representing rotational unevenness in one rotation, from a signal representing the rotation speed of the wheel assembly. Then, with respect to each wheel assembly, the control unit 2 determines whether or not tread peeling has occurred, by comparing the detection index in the current cycle EC (0) with the detection index in the past cycle EC (0-X), which is a predetermined cycle EC (X) before the current cycle EC (0). Further, if the control unit 2 according to the present embodiment has determined that "tread peeling has occurred in at least one of the wheel assemblies FL, FR, RL, RR", the control unit 2 causes the display device 6 to display the determination result to notify the occupant of the vehicle VH such as the driver of the determination result.

### <3. Tread peeling detection process>

FIG. 3 and FIG. 4 are each a flowchart showing an example of the processing procedure performed by the control unit 2 according to the present embodiment. The processing procedure described below is an example of the processing procedure of an information processing method (tread peeling detection method PM) for "determining whether or not tread peeling has occurred in a wheel assembly included in the vehicle VH". However, the processing procedure described below is merely an example, and each step may be changed as much as possible. Further, with respect to the processing procedure described below, omission, replacement, and addition of steps can be made as appropriate in accordance with an embodiment.

The tread peeling detection method PM described below is roughly divided into a training phase and a tread peeling detection phase. In the training phase, the tread peeling detection system 1 prepares a reference value for calculating the detection index (second index Y), particularly, a reference value for each rotational order. In the present embodiment, on the basis of a signal from each sensor 30, particularly, on the basis of the rotation speed of each wheel assembly in which an abnormality such as tread peeling has not occurred, the control unit 2 prepares a reference value for each rotational order with respect to the wheel assembly, and stores the prepared reference value into the storage device 12 of the control unit 2. In contrast, in the tread peeling detection phase, the control unit 2 periodically calculates the second index Y for determining whether or not tread peeling has occurred, from a signal from the sensor 30 and the reference value prepared in the training phase. Then, with respect to the second index Y that is periodically calculated, the control unit 2 compares the second index Y (detection index) in the current cycle EC (0) with the second index Y in the past cycle EC (0-X), which is a predetermined cycle EC (X) before the current cycle EC (0), thereby determining whether or not tread peeling has occurred in the wheel assembly.

### (Step S10)

In step S10, the CPU 9 operates as the signal acquisition unit 21 and sequentially acquires a signal representing the rotation speed of each wheel assembly, as pulses having a rise. In the present embodiment, with respect to each wheel assembly, the CPU 9 sequentially acquires a sine wave signal outputted from each sensor 30, as pulses having a rise.

### (Step S20)

In step S20, the CPU 9 operates as the signal acquisition unit 21 and calculates a passage time tᵢ of one pulse, with respect to the signal (in the present embodiment, the sine wave signal outputted from the sensor 30) acquired in step S10. The passage time tᵢ corresponds to a time for which a tooth (i) having a tooth number i (i = 1, 2,..., N) of the rotating body 31 passes in front of the sensor 30. This passage time tᵢ can be measured on the basis of a signal referred to as "time stamp" that is supplied from, for example, a clock module installed in the sensor 30. For example, the CPU 9 samples the sine wave signal at a predetermined cycle to convert the sine wave signal into a rectangular wave (square wave) that changes between two levels, and calculates the passage time tᵢ with respect to each pulse. In the present embodiment, the CPU 9 further calculates the average value (hereinafter, referred to as "average passage time tₘₑₐₙ") of the passage time tᵢ of pulses for the number of teeth N corresponding to one rotation of the wheel assembly. In other words, the CPU 9 calculates, as the average passage time tₘₑₐₙ, the average value of the "passage time tᵢ of one pulse (each pulse)" for one rotation.

Here, the pitch of the teeth of the rotating body 31 is not completely uniform, and in each passage time tᵢ during which the rotating body 31 makes one rotation, variation corresponding to the pitch of each tooth (i) occurs. Therefore, in the present embodiment, the CPU 9 generates (calculates) the "first index representing temporal variation of the rise of the pulses for one rotation of the wheel assembly" in consideration of the "variation corresponding to the pitch of each tooth (i)". The CPU 9 executes, for example, the following step S30 and step S40, to calculate the first index in consideration of the "variation corresponding to the pitch of each tooth (i)" of each passage time tᵢ.

### (Step S30)

In step S30, the CPU 9 operates as the index calculation unit 22 (first index calculation unit 221, in particular), and calculates a comparison value xᵢ for comparing each of the passage times tᵢ of the pulses for the number of teeth N corresponding to one rotation of the wheel assembly with the average passage time tₘₑₐₙ, according to the following equation. ${x}_{i} = {t}_{i} / {t}_{mean} - 1$

### (Step S40)

In step S40, the CPU 9 operates as the index calculation unit 22 (first index calculation unit 221, in particular) and estimates a signal representing the comparison value xᵢ for one rotation of the wheel assembly, that is, [Math. 1] ${\hat{x}}_{i} \left(k\right)$ (hereinafter, this signal will also be referred to as "xᵢ(k) with a hat"). Step S40 can be considered as a step for reducing noise included in the comparison value xᵢ and modeling the comparison value xᵢ, and the estimation method is not particularly limited, but the xᵢ(k) with a hat can be estimated through feedback processing according to the following equation, for example. [Math. 2] ${\hat{x}}_{i} \left(k\right) = {\hat{x}}_{i} \left(k-1\right) + σ \left\{{x}_{i}\left(k-1\right)-{\hat{x}}_{i}\left(k-1\right)\right\}$

[Math. 3] Here, *i* denotes the tooth number, *x̂ᵢ*(*k -* 1) denotes an estimation value of *xᵢ*(*k -* 1) at one previous time, and *σ* denotes an observer gain.

The xᵢ(k) with a hat estimated in step S40 is a correction coefficient for correcting variation of the passage time tᵢ for the tooth (i). In a state where an abnormality such as tread peeling has not occurred in the wheel assembly, the xᵢ(k) with a hat is a signal including a frequency component corresponding to the pitch of each tooth (i). That is, the xᵢ(k) with a hat estimated in step S40 is an example of the first index representing temporal variation of the rises of the pulses for one rotation of the wheel assembly, which are sequentially acquired in step S20. The first index is not limited to this, as long as the first index is an index representing temporal variation of the rises of the pulses for one rotation of the wheel assembly.

As described above, in step S30 and step S40, the CPU 9 operates as the index calculation unit 22 (first index calculation unit 221, in particular), and calculates the first index representing temporal variation of the rise of each of the pulses corresponding to one rotation of the wheel assembly. As described above, in the present embodiment, the CPU 9 calculates the "first index representing temporal variation of the rise of each of the pulses corresponding to one rotation of the wheel assembly" (in the present embodiment, "xᵢ(k) with a hat") in consideration of the "variation of the passage time tᵢ of each tooth (i) corresponding to the pitch of each tooth (i)".

### (Step S50)

Step S50 is a step including a loop of steps S60 to S80. In step S50, the CPU 9 operates as the index calculation unit 22 (spectrum calculation unit 222, in particular) and derives the frequency spectrum of the xᵢ(k) with a hat (in other words, first index) estimated (calculated) in step S40. Then, on the basis of the derived (calculated) frequency spectrum, the CPU 9 calculates the gain Gⱼ (j = 1, 2, ..., m) with respect to the rotational orders from the first order to the mth order. Here, "m" is an integer of "1" or greater. In the present embodiment, in step S50, the CPU 9 calculates the gain Gⱼ for each rotational order with respect to each wheel assembly, by using a signal for one rotation of the wheel assembly sequentially acquired from the corresponding sensor 30.

For example, the CPU 9 operating as the spectrum calculation unit 222 performs frequency analysis on the xᵢ(k) with a hat (i.e., first index), to calculate (derive) the frequency spectrum of the xᵢ(k) with a hat. In the present embodiment, the CPU 9 derives the frequency spectrum, for rotational orders from the first order to the mth order, of the xᵢ(k) with a hat. Then, on the basis of the derived frequency spectrum, the CPU 9 calculates the gain Gⱼ for each rotational order from the first order to the mth order. Accordingly, in step S50, the gains Gⱼ of the frequency spectrum for the rotational orders from the first order to the mth order are calculated. Hereinafter, processes executed in steps S60 to S80 will be described using the first loop as an example.

### (Step S60)

In step S60, the CPU 9 operates as the index calculation unit 22 (spectrum calculation unit 222, in particular), and extracts rotational order components from the first order to the mth order. In the first loop, the CPU 9 performs analysis on the first rotational order component, that is, the component that completes one cycle, corresponding to one rotation of the wheel assembly. The CPU 9 passes the xᵢ(k) with a hat corresponding to one rotation of the wheel assembly through a bandpass filter that allows a frequency band around the first rotational order component to pass therethrough, to extract a component around the first rotational order.

### (Step S70)

In step S70, the CPU 9 operates as the index calculation unit 22 (spectrum calculation unit 222, in particular), and applies a window function to the rotational order component extracted in step S60. In the first loop, the CPU 9 applies the window function to the component around the first rotational order extracted in step S60. The process in step S70 is a process for cutting out a finite section prior to calculation of the gain Gⱼ for each rotational order in the subsequent step S80. The window function to be applied is not particularly limited, and a known window function such as the Hanning window or the Hamming window can be applied. From the viewpoint of rapid side lobe attenuation, the Blackman window function is preferable.

### (Step S80)

In step S80, the CPU 9 operates as the index calculation unit 22 (spectrum calculation unit 222, in particular) and calculates the gain Gⱼ with respect to a signal obtained by multiplying by the window function in step S70. In the first loop, with respect to the signal obtained by multiplying by the window function in step S70, the CPU 9 calculates the gain G₁ for the first rotational order. For example, the spectrum calculation unit 222 specifies the gain G₁ for the first rotational order from the signal on the time axis, on the basis of Parseval's theorem. Here, the first loop ends, and the second loop starts.

In the second loop, the CPU 9 performs analysis on the second rotational order component, that is, the component that completes two cycles, corresponding to one rotation of the wheel assembly. The CPU 9 operating as the index calculation unit 22 (spectrum calculation unit 222, in particular) changes the frequency band of the bandpass filter in step S60 to set a bandpass filter through which the frequency band around the second rotational order component is passed. That is, in step S60 in the second loop, the CPU 9 extracts the component around the second rotational order from the xᵢ(k) with a hat (i.e., first index) corresponding to one rotation of the wheel assembly estimated in step S40. Then, the CPU 9 executes steps S70 and S80 in the same manner as in the first loop.

As described above, the CPU 9 operating as the index calculation unit 22 (spectrum calculation unit 222, in particular) repeats steps S60 to S80 on the component that has completed j cycles corresponding to one rotation of the wheel assembly, while changing the passage frequency band of the bandpass filter each time the number of loops increases by one. Accordingly, when all loops in step S50 have been completed, the gains Gⱼ (j = 1, 2, ..., m) for the rotational orders from the first order to the mth order are calculated. The CPU 9 stores the calculated gain Gⱼ for each rotational order into the RAM 11 or the storage device 12. The processes from steps S20 to S80 are repeated on the signal for one rotation of each wheel assembly sequentially acquired from the corresponding sensor 30 in step S10. That is, each time a signal for one rotation of each wheel assembly has been sequentially inputted, the gain Gⱼ for each rotational order is sequentially calculated.

Here, the maximum order m for the rotational order analysis is not particularly limited and may be an integer of 1 or greater. From the viewpoint of improving the reliability of abnormality detection, m is preferably 10 or greater. In the present embodiment, m = 20.

### (Step S90)

With reference to FIG. 4, in the subsequent step S90, the CPU 9 operates as the index calculation unit 22 (reference value generation unit 223, in particular), and determines whether or not a reference value for calculating the second index Y (detection index) for determining whether or not tread peeling has occurred has already been specified and stored in the storage device 12 (whether or not training has been performed). Details of the second index will be described later. The reference value is prepared for each rotational order. The reference value (reference value for each rotational order) in the present embodiment is a statistical value of the gain Gⱼ for each rotational order calculated in step S50, and is, for example, the average value of the gain Gⱼ for each rotational order. For example, the reference value is the average value of the gain Gⱼ for each rotational order in a period in which an abnormality such as tread peeling has not occurred. If the reference value has not been specified yet (NO in step S90), the process shifts to a training loop (reference value generation loop) in step S100. Meanwhile, if the reference value has already been specified (YES in step S90), the process shifts to a variation amount calculation loop in step S110. That is, steps S10 to S80 and step S100 correspond to the training phase described above, and steps S10 to S80 and S110 to S140 correspond to the tread peeling detection phase described above.

### (Step S100)

In step S100, the CPU 9 operates as the index calculation unit 22 (reference value generation unit 223, in particular) and generates a reference value for each rotational order, from the gain Gⱼ for each rotational order sequentially calculated in step S50. For example, the CPU 9 calculates a statistical value of the gain Gⱼ for each rotational order, and sets the calculated "statistical value of the gain Gⱼ for each rotational order" as the reference value for each rotational order. As described above, in the present embodiment, the CPU 9 calculates the average value of the gain Gⱼ for each rotational order in a period in which an abnormality such as tread peeling has not occurred, and stores, as the reference value for each rotational order, the calculated "average value of the gain Gⱼ for each rotational order" into the storage device 12.

For example, in the training loop in step S100, with respect to the rotational orders from the first order to the mth order, the CPU 9 repeatedly executes the process of calculating the average value of the gain Gⱼ calculated in step S50 and storing the average value. When step S 100 has ended, steps S10 to S40 and m loops of S60 to S80 are executed again, subsequently, m loops of step S100 are executed again, and the reference value for each rotational order stored in the storage device 12 (in the present embodiment, the average value of the gain Gⱼ for each rotational order) is updated. When steps S10 to S40, m loops of steps S60 to S80, and m loops of step S 100 have been repeated by a predetermined number of times or by an amount corresponding to a predetermined travel distance, the training phase is completed and shifts to the tread peeling detection phase. In the present embodiment, when, in a period in which an abnormality such as tread peeling has not occurred, steps S10 to S40, m loops of steps S60 to S80, and m loops of step S 100 have been repeated by a predetermined number of times or by an amount corresponding to a predetermined travel distance, the training phase is completed. In the tread peeling detection phase, step S110 is executed after steps S10 to S40 and m loops of steps S60 to S80.

### (Step S110)

In step S110, the CPU 9 operates as the index calculation unit 22 (change amount calculation unit 224, in particular) and calculates the gain variation amount Eⱼ for each rotational order from the first order to the mth order, by using the difference between the gain Gⱼ for each rotational order calculated in step S50 and the reference value for each rotational order stored in the storage device 12. In the present embodiment, the CPU 9 calculates, as the gain variation amount Eⱼ for each rotational order, the absolute value of the difference between the gain Gⱼ for each rotational order and the "average value of the gain Gⱼ for each rotational order in a period in which an abnormality has not occurred". For example, in the variation amount calculation loop in step S110, with respect to the rotational orders from the first order to the mth order, the CPU 9 repeatedly executes the process of calculating, as the gain variation amount Eⱼ for each rotational order, the absolute value of the difference between the gain Gⱼ calculated in step S50 and the reference value for each rotational order stored in the storage device 12.

### (Step S120)

In step S120, the CPU 9 operates as the index calculation unit 22 (second index calculation unit 225, in particular) and calculates the second index Y (detection index) for determining whether or not tread peeling has occurred. The CPU 9 calculates the second index Y from the gain variation amount Eⱼ for each rotational order from the first order to the mth order calculated in step S110, and calculates, as the second index Y, the total (sum) of the gain variation amount Eⱼ for each rotational order from the first order to the mth order, for example. From the content described above, the second index Y can be considered, with respect to each wheel assembly, as an index representing "rotational unevenness of the wheel assembly in one rotation of the wheel assembly".

### (Step S130)

In step S130, the CPU 9 operates as the index calculation unit 22 (second index calculation unit 225, in particular) and stores the second index Y (detection index) calculated in step S 120 into the storage device 12.

As described above, in step S10, the CPU 9 sequentially acquires a signal representing the rotation speed of each wheel assembly as pulses having a rise, from the corresponding sensor 30. Then, with respect to each wheel assembly, the CPU 9 calculates the second index Y (detection index) representing "rotational unevenness of the wheel assembly in one rotation of the wheel assembly", from the signal sequentially acquired from the corresponding sensor 30. In the present embodiment, with respect to each wheel assembly, the CPU 9 periodically calculates the second index Y, from the signal representing the rotation speed of the wheel assembly sequentially acquired from the corresponding sensor 30. For example, the CPU 9 repeatedly calculates the second index Y at a cycle corresponding to one rotation of the wheel assembly. The CPU 9 periodically stores the periodically calculated second index Y into the storage device 12.

### (Step S140)

In step S140, the CPU 9 operates as the determination unit 23 and executes the following comparison with respect to the second index Y (detection index) calculated in step S 120, with "X" defined as a "predetermined integer of 1 or greater". That is, the CPU 9 compares the second index Y calculated in the current cycle EC (0) with the second index Y (e.g., the second index Y stored in the storage device 12 in step S130 in the past cycle EC (0-X)) in the past cycle EC (0-X), which is a predetermined cycle EC (X) before the current cycle EC (0). If the second index Y in the current cycle EC (0) has increased exceeding a predetermined value or a predetermined proportion from the second index Y in the past cycle EC (0-X) (YES in step S140), the CPU 9 determines that tread peeling has occurred and executes step S150. If the second index Y in the current cycle EC (0) has not increased exceeding a predetermined value or a predetermined proportion from the second index Y in the past cycle EC (0-X) (NO in step S 140), the CPU 9 ends the process.

The CPU 9 operating as the determination unit 23 may determine whether or not tread peeling has occurred in the wheel assembly, by comparing a statistical amount of the second index Y (detection index) in a plurality of cycles in a predetermined range including the current cycle EC (0), with the statistical amount of the second index Y in a plurality of cycles in a predetermined range including the past cycle EC (0-X). For example, with "k" defined as a "predetermined integer of 1 or greater and smaller than X", the CPU 9 may determine whether or not tread peeling has occurred in the wheel assembly, by comparing the average value of the second index Y in "k+1" cycles including the current cycle EC (0) with the average value of the second index Y in "k+1" cycles including the past cycle EC (0-X).

The CPU 9 operating as the determination unit 23 may identify the wheel assembly (tread-peeling-occurrence wheel assembly) for which it has been determined as "tread peeling has occurred". For example, the CPU 9 may identify, as the tread-peeling-occurrence wheel assembly, the wheel assembly in which the second index Y in the current cycle EC (0) has increased exceeding a predetermined value or a predetermined proportion from the second index Y in the past cycle EC (0-X). Similarly, the CPU 9 may identify, as the tread-peeling-occurrence wheel assembly, the wheel assembly in which a statistical amount of the second index Y in a plurality of cycles in a predetermined range including the current cycle EC (0) has increased exceeding a predetermined value or a predetermined proportion from the statistical amount of the second index Y in a plurality of cycles in a predetermined range including the past cycle EC (0-X).

### (Step S150)

In step S150, the CPU 9 operates as the notification control unit 24, causes the display device 6 to display the determination result that "tread peeling has occurred in at least one of the wheel assemblies FL, FR, RL, RR", and notifies the occupant of the vehicle VH of the occurrence of tread peeling. In a case where the tread-peeling-occurrence wheel assembly has been identified in step S140, the CPU 9 operating as the notification control unit 24 may notify the occupant of the vehicle VH of information that distinguishes the tread-peeling-occurrence wheel assembly from the other wheel assemblies.

### <4. Features>

As described above, the control unit 2 (tread peeling detection device) according to the present embodiment includes the signal acquisition unit 21, the index calculation unit 22, and the determination unit 23. The signal acquisition unit 21 sequentially acquires a signal representing the rotation speed of each of the wheel assemblies FL, FR, RL, RR included in the vehicle VH, as pulses having a rise. The index calculation unit 22 periodically calculates, from temporal variation of the rise of each of the pulses corresponding to one rotation of the wheel assembly, the second index Y (detection index) representing rotational unevenness of the wheel assembly in one rotation. For example, with respect to each of the wheel assemblies FL, FR, RL, RR, the index calculation unit 22 periodically calculates the second index Y, from "temporal variation of the rise of each of the pulses corresponding to one rotation of the wheel assembly" in the "signal representing the rotation speed of the wheel assembly" described above. The determination unit 23 determines whether or not tread peeling has occurred in the wheel assembly, by comparing the second index Y (detection index) in the current cycle EC (0) with the second index Y in the past cycle EC (0-X), which is a predetermined cycle EC (X) before the current cycle EC (0). For example, with respect to each of the wheel assemblies FL, FR, RL, RR, the determination unit 23 determines whether or not tread peeling has occurred in the wheel assembly, by comparing the second index Y in the current cycle EC (0) with the second index Y in the past cycle EC (0-X).

The tread peeling detection method PM according to the present embodiment causes a computer (in the present embodiment, the CPU 9 of the control unit 2) to execute step S10 exemplified in FIG. 3 and step S120 and step S140 exemplified in FIG. 4. In step S10, the CPU 9 sequentially acquires a signal representing the rotation speed of each of the wheel assemblies FL, FR, RL, RR included in the vehicle VH, as pulses having a rise. In step S120, the CPU 9 periodically calculates the second index Y (detection index) representing "rotational unevenness of the wheel assembly in one rotation of the wheel assembly". For example, the CPU 9 estimates the first index (in the present embodiment, xᵢ(k) with a hat) representing temporal variation of the rise of each of the pulses corresponding to one rotation of the wheel assembly, from the signal (pulses) sequentially acquired in step S10, and calculates the second index Y (detection index) from the estimated first index. In step S140, the CPU 9 determines whether or not tread peeling has occurred in the wheel assembly, by executing the following comparison with respect to the second index Y (detection index) calculated in step S120. That is, the CPU 9 determines whether or not tread peeling has occurred in the wheel assembly, by comparing the second index Y calculated in the current cycle EC (0) with the second index Y (e.g., the second index Y stored in the storage device 12 in step S130 in the past cycle EC (0-X)) in the past cycle EC (0-X), which is a predetermined cycle EC (X) before the current cycle EC (0). In the present embodiment, the program 13 causes a computer (e.g., the CPU 9) to execute each step according to the tread peeling detection method PM described above. The program 13 may be stored in the storage medium 14.

According to the configuration, the control unit 2 (tread peeling detection method PM) sequentially acquires a signal representing the rotation speed of each of the wheel assemblies FL, FR, RL, RR, as pulses having a rise, and, with respect to each wheel assembly, calculates the second index Y (detection index) representing "rotational unevenness of the wheel assembly in one rotation of the wheel assembly", from the signal (pulses). Then, using the calculated second index Y, with respect to each wheel assembly, the control unit 2 (tread peeling detection method PM) determines whether or not the rotation state of the wheel assembly has changed, and if the rotation state of the wheel assembly has changed, determines that tread peeling has occurred in the wheel assembly. By using the second index Y calculated with respect to each wheel assembly, the control unit 2 (tread peeling detection method PM) can highly accurately determine whether or not tread peeling has occurred, with respect to each wheel assembly.

In particular, with respect to each wheel assembly, the control unit 2 (tread peeling detection method PM) periodically calculates the second index Y (detection index) described above, from the signal representing the rotation speed of the wheel assembly. Then, with respect to each wheel assembly, the control unit 2 (tread peeling detection method PM) determines whether or not tread peeling has occurred in the wheel assembly, by comparing the second index Y in the current cycle EC (0) with the second index Y in the past cycle EC (0-X), which is a predetermined cycle EC (X) before the current cycle EC (0). That is, the control unit 2 (tread peeling detection method PM) determines whether or not tread peeling has occurred, by periodically calculating the second index Y for each wheel assembly, and comparing the second index Y in the current cycle EC (0) with the second index Y in the past cycle EC (0-X) for each wheel assembly. Therefore, the control unit 2 can highly accurately detect tread peeling, for each tire 7a (wheel assembly) mounted to the vehicle VH.

### <5. Modifications>

The embodiment of the present invention has been described in detail, but the description above is merely an example of the present invention. It is needless to say that various improvements and modifications can be made without departing from the scope of the present invention. For example, the following modifications can be made. In the following, the same components as those in the above embodiment are denoted by the same reference characters, and description of the same contents as those in the above embodiment are omitted as appropriate. The following modifications can be combined together as appropriate.
(1)
   The control unit 2 (tread peeling detection method PM) described above determines whether or not tread peeling has occurred in the wheel assembly, by comparing the following two second indexes Y (or statistical values of the second index Y). That is, the control unit 2 determines whether or not tread peeling has occurred, by comparing the second index Y in the current cycle EC (0) (or a statistical value of the second index Y in a plurality of cycles in a predetermined range including the current cycle EC (0)) with the second index Y in the past cycle EC (0-X) (or the statistical value of the second index Y in a plurality of cycles in a predetermined range including the past cycle EC (0-X)). However, the control unit 2 (tread peeling detection method PM) may determine whether or not tread peeling has occurred on the basis of whether or not the second index Y in the current cycle EC (0) (or the statistical value of the second index Y in a plurality of cycles in a predetermined range including the current cycle EC (0)) exceeds a predetermined fixed value (e.g., a predetermined tread peeling threshold).
(2)
   With respect to a specific hardware configuration of the control unit 2, omission, replacement, and addition of components can be made as appropriate in accordance with an embodiment. For example, processor resources may include a plurality of hardware processors. The hardware processor may be composed of a microprocessor, an FPGA (field-programmable gate array), a DSP (digital signal processor), or the like. The control unit 2 may be composed of a plurality of computers. In this case, the hardware configuration of each computer may be the same or different. The control unit 2 may be a general-purpose server device, a PC (Personal Computer), or the like other than an information processing device designed to be dedicated to the service to be provided. Further, the control unit 2 may be realized as a computer integrated with an ECU included in the vehicle VH, such as a travel management ECU (not shown) that manages travel of the vehicle VH.

## Claims

1. A tread peeling detection device (2) comprising:
a signal acquisition unit (21) configured to sequentially acquire a signal representing a rotation speed of a wheel assembly (FL, FR, RL, RR) included in a vehicle (VH), as pulses having a rise;
a detection index calculation unit (22) configured to periodically calculate, from temporal variation of the rise of each of the pulses corresponding to one rotation of the wheel assembly (FL, FR, RL, RR), a detection index representing rotational unevenness of the wheel assembly (FL, FR, RL, RR) in the one rotation; and
a determination unit (23) configured to determine whether or not tread peeling has occurred in the wheel assembly (FL, FR, RL, RR), by comparing the detection index in a current cycle (EC (0)) with the detection index in a past cycle (EC (0-X)), which a predetermined cycle (EC (X)) before the current cycle (EC (0)).

2. The tread peeling detection device (2) according to claim 1, wherein
the determination unit (23) compares
a statistical amount calculated from the detection index in each of a plurality of cycles in a predetermined range including the current cycle (EC (0)), with
the statistical amount calculated from the detection index in each of a plurality of cycles in the predetermined range including the past cycle EC ((0-X)).

3. The tread peeling detection device (2) according to claim 1 or 2, further comprising:
a first index calculation unit (221) configured to calculate a first index representing the temporal variation, from the signal sequentially acquired by the signal acquisition unit (21); and
a spectrum calculation unit (222) configured to calculate a frequency spectrum for rotational orders from a first order to an mth order (where m≥1) of the first index, by performing frequency analysis on the first index, wherein
the detection index calculation unit (22) periodically calculates the detection index, from a gain for each rotational order of the frequency spectrum calculated by the spectrum calculation unit (222).

4. A tread peeling detection method (PM) performed by a computer, the tread peeling detection method (PM) comprising the steps of:
sequentially acquiring a signal representing a rotation speed of a wheel assembly (FL, FR, RL, RR) included in a vehicle (VH), as pulses having a rise;
periodically calculating, from temporal variation of the rise of each of the pulses corresponding to one rotation of the wheel assembly (FL, FR, RL, RR), a detection index representing rotational unevenness of the wheel assembly (FL, FR, RL, RR) in the one rotation; and
determining whether or not tread peeling has occurred in the wheel assembly (FL, FR, RL, RR), by comparing the detection index in a current cycle (EC (0)) with the detection index in a past cycle (EC (0-X)), which is a predetermined cycle (EC (X)) before the current cycle (EC (0)).

5. A tread peeling detection program for causing a computer to perform the steps of:
sequentially acquiring a signal representing a rotation speed of a wheel assembly (FL, FR, RL, RR) included in a vehicle (VH), as pulses having a rise;
periodically calculating, from temporal variation of the rise of each of the pulses corresponding to one rotation of the wheel assembly (FL, FR, RL, RR), a detection index representing rotational unevenness of the wheel assembly (FL, FR, RL, RR) in the one rotation; and
determining whether or not tread peeling has occurred in the wheel assembly (FL, FR, RL, RR), by comparing the detection index in a current cycle (EC (0)) with the detection index in a past cycle (EC (0-X)), which is a predetermined cycle (EC (X)) before the current cycle (EC (0)).
